# EUROPÄISCHE PATENTSCHRIFT

(11) **EP 3 115 518 B1**
(45) Veröffentlichungstag und Bekanntmachung des Hinweises auf die Patenterteilung: **01.01.2020**
(21) Anmeldenummer: 16001353.8
(22) Anmeldetag: 15.06.2016
(51) Int. Cl.: E03C 1/04, E03C 1/05, F16K 31/06, E03C 1/02

(54) **SANITÄRARMATUR MIT ZWEI VENTILEN**
SANITARY FITTING WITH TWO VALVES
ROBINETTERIE COMPRENANT DEUX SOUPAPES

(30) Priorität: 15.06.2015 DE 102015007456
(43) Veröffentlichungstag der Anmeldung: 11.01.2017
(73) Patentinhaber: Grohe AG, 58675 Hemer (DE)
(72) Erfinder: Mainka, David, 58640 Iserlohn (DE); Hamer, Felix, 58644 Iserlohn (DE)

(56) Entgegenhaltungen:
- DE-A1- 19 625 252
- DE-A1-102005 001 310
- GB-A- 2 248 469
- US-A1- 2014 345 726
- US-B1- 9 010 377

## Beschreibung

Die vorliegende Erfindung betrifft eine Sanitärarmatur, beispielsweise nach Art einer Mischbatterie oder Mischarmatur, die insbesondere dem Mischen von Kaltwasser und Warmwasser zu einem Mischwasser mit einer gewünschten Mischwassertemperatur dient. Die gebräuchlichste Verwendung von Sanitärarmaturen ist die an Waschbecken, Spülbecken, Duschen und/oder Badewannen.

Aus der US 2010/0170570 A1 ist beispielsweise eine Sanitärarmatur mit zwei Absperrventilen bekannt. Bei einem ersten Absperrventil handelt es sich um ein manuelles Ventil, das über einen Hebel der Sanitärarmatur konventionell betätigbar ist. Das zweite Absperrventil ist elektronisch gesteuert und mittels eines kapazitiven Sensors betätigbar. Ein Wasserfluss ist somit einerseits konventionell über den mechanischen Hebel oder durch einfaches Berühren der Sanitärarmatur aktivierbar. Nachteilig an dieser Sanitärarmatur ist, dass für das Aktivieren des Wasserflusses über den kapazitiven Sensor das erste Absperrventil über den Hebel manuell offengestellt sein muss. Der Wasserfluss ist folglich durch den kapazitiven Sensor nicht unabhängig von dem ersten Absperrventil aktivierbar.

DE 19625252 A1 offenbart eine Wasserauslauf-Armatur mit einer Misch- und Absperreinheit mit üblicher Bedienung durch einen Einhandhebel, und mit einer zusätzlichen Leitung, die unter Umgehung der Misch- und Absperreinheit die Einleitung von Wasser in den Auslauf ermöglicht, wobei die zusätzliche Leitung über ein elektrisches Ventil gegenüber dem Kalt- und Warmwasserzulauf abgesperrt wird und einen zusätzlichen Mischer enthält.

DE 102005001310 A1 offenbart eine Sanitärarmatur mit zwei Mischventilen in einem Armaturengehäuse.

Aufgabe der Erfindung ist es daher, die mit Bezug auf den Stand der Technik geschilderten Probleme zumindest teilweise zu lösen und insbesondere eine Sanitärarmatur anzugeben, bei der ein verbesserter Wasserfluss bzw. eine einfachere Handhabung ermöglicht wird. Dabei soll die Sanitärarmatur möglichst robust und kompakt aufgebaut sowie kostengünstig herstellbar sein.

Diese Aufgaben werden gelöst mit einer Sanitärarmatur gemäß den Merkmalen des unabhängigen Patentanspruchs. Weitere vorteilhafte Ausgestaltungen der Sanitärarmatur sind in den abhängig formulierten Patentansprüchen angegeben. Es ist darauf hinzuweisen, dass die in den abhängig formulierten Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegeben Merkmale in der Beschreibung näher präzisiert und erläutert, wobei weitere bevorzugte Ausgestaltungen der Erfindung dargestellt werden.

Die Sanitärarmatur weist ein Armaturengehäuse mit zumindest einer Mischeinheit zum Mischen eines Kaltwassers und eines Warmwassers zu einem Mischwasser auf, wobei das Mischwasser über einen ersten Strömungspfad und einen zweiten Strömungspfad zu einem Auslauf des Armaturengehäuses leitbar ist und wobei der erste Strömungspfad durch ein erstes Ventil und der zweite Strömungspfad durch ein zweites Ventil zumindest teilweise verschließbar ist, sodass durch das erste Ventil und das zweite Ventil unabhängig voneinander ein Abfluss des Mischwassers aus dem Auslauf steuerbar ist.

Die Sanitärarmatur ist beispielsweise nach Art einer Mischbatterie oder Mischarmatur ausgestaltet und wird insbesondere an Wachbecken, Spülbecken, Duschen und/oder Badewannen verwendet. Die Sanitärarmatur weist ein Armaturengehäuse mit zumindest einer Mischeinheit zum Mischen eines Kaltwassers und eines Warmwasser zu einem Mischwasser auf. Das Armaturengehäuse besteht insbesondere zumindest teilweise aus Metall, wie beispielsweise aus einer Messinglegierung. Der zumindest einen Mischeinheit wird über einen Kaltwasserzulauf Kaltwasser und über einen Warmwasserzulauf Warmwasser zugeführt. Das Kaltwasser weist insbesondere eine Temperatur von 0 °C - 40 °C und/oder das Warmwasser eine Temperatur von 40 °C - 90 °C auf. Das Kaltwasser und das Warmwasser werden in der zumindest einen Mischwassereinheit zu einem Mischwasser mit einer gewünschten Mischwassertemperatur gemischt. Ausgehend von der zumindest einen Mischeinheit wird das Mischwasser über einen ersten Strömungspfad und einen zweiten Strömungspfad zu einem Auslauf des Armaturengehäuses geleitet. Bei dem ersten Strömungspfad und/oder dem zweiten Strömungspfad kann es sich beispielsweise um Kanäle in dem Armaturengehäuse oder um in dem Armaturengehäuse geführte (Schlauch-)Leitungen handeln. Der erste Strömungspfad ist mittels eines ersten Ventils und der zweite Strömungspfad mittels eines zweiten Ventils zumindest teilweise (insbesondere auch vollständig) verschließbar, sodass durch das erste Ventil und das zweite Ventil unabhängig voneinander ein Abfluss des Mischwassers aus dem Auslauf steuerbar ist. Somit kann mittels voreingestellter Positionen des ersten Ventils und/oder des zweiten Ventils ein Wasserfluss durch den ersten Strömungspfad und/oder den zweiten Strömungspfad (vollständig oder reduziert) zugelassen und/oder unterbunden werden. Das erste Ventil kann hierzu in dem ersten Strömungspfad und/oder das zweite Ventil in dem zweiten Strömungspfad angeordnet sein. Das Mischwasser kann somit insbesondere über den ersten Strömungspfad und/oder den zweiten Strömungspfad von der zumindest einen Mischeinheit zu dem Auslauf des Armaturengehäuses geleitet werden. Der Abfluss des Mischwassers aus dem Auslauf des Armaturengehäuses kann daher entweder durch das erste Ventil oder das zweite Ventil unabhängig gesteuert werden.

Zudem ist es vorteilhaft, wenn es sich bei dem ersten Ventil um ein elektrisches Ventil, ein elektromechanisches Ventil oder ein Magnetventil handelt. Dies bedeutet insbesondere, dass das erste Ventil elektrisch steuerbar ist. Das erste Ventil kann hierzu insbesondere einen Stellmotor aufweisen. Bei dem Magnetventil handelt es sich insbesondere um ein Ventil, das von einem Elektromagneten betätigbar ist.

Ebenfalls vorteilhaft ist es, wenn das erste Ventil durch mindestens einen Sensor steuerbar ist. Bei dem Sensor kann es sich beispielsweise um einen Infrarotsensor, einen kapazitiven Sensor und/oder einen Schalter handeln. Der Sensor kann direkt an dem Armaturengehäuse angeordnet sein. Insbesondere kann der Sensor ein Sensorsignal an eine Steuerung, beispielsweise nach Art eines Mikroprozessors, übertragen, durch den das erste Ventil gesteuert wird.

Darüber hinaus ist es vorteilhaft, wenn der Sensor außerhalb der Sanitärarmatur angeordnet ist. Der Sensor kann in diesem Fall beispielsweise an einem Wasserhahn, einem Waschbecken, einem Spülbecken, einer Dusche oder einer Badewanne angeordnet sein. Hierdurch kann der Sensor insbesondere derart platziert werden, dass dieser durch einen Benutzer der Sanitärarmatur besonders leicht zu erreichen ist. Der Sensor ist jedoch regelmäßig zumindest teilweise oder vollständig innerhalb der Sanitärarmatur angeordnet.

Darüber hinaus ist es vorteilhaft, wenn es sich bei dem zweiten Ventil um ein mechanisches Ventil, eine Mischkartusche oder eine zweite Mischeinheit handelt. Bei einem mechanischen Ventil erfolgt die Aktivierung bzw. Bewegung des Ventils (nur) mit einer Mechanik, also z.B. unter Einsatz von Hebeln, Zahnrädern, Scheiben, Exzenter, Pleuel, etc.

Ebenfalls vorteilhaft ist es, wenn das zweite Ventil mit einem Stellglied betätigbar ist. Das Stellglied ist insbesondere an dem Armaturengehäuse angeordnet und durch einen Benutzer betätigbar. Mittels des Stellglieds ist insbesondere ein Öffnen und/oder Schließen des zweiten Ventils möglich. Zudem kann durch das Stellglied insbesondere auch eine gewünschte Mischwassertemperatur des Mischwassers gewählt werden. Bei dem Stellglied kann es sich insbesondere um zumindest einen Hebel und/oder um zumindest einen Griff handeln. Das Stellglied ist zudem insbesondere an dem Armaturengehäuse angeordnet.

Zudem ist es vorteilhaft, wenn das erste Ventil und das zweite Ventil parallel zueinander und jeweils in Reihe mit einer ersten Mischeinheit geschaltet sind.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, diese jedoch nicht darauf beschränkt ist. Dabei sind gleiche Bauteile in den Figuren mit denselben Bezugszeichen versehen. Es zeigen schematisch:
- Fig. 1:: eine erste Ausführungsvariante der Sanitärarmatur;
- Fig. 2:: eine nicht-erfindungsgemäße, beispielhafte Sanitärarmatur; und

- Fig. 3:: eine zweite Ausführungsvariante der Sanitärarmatur.

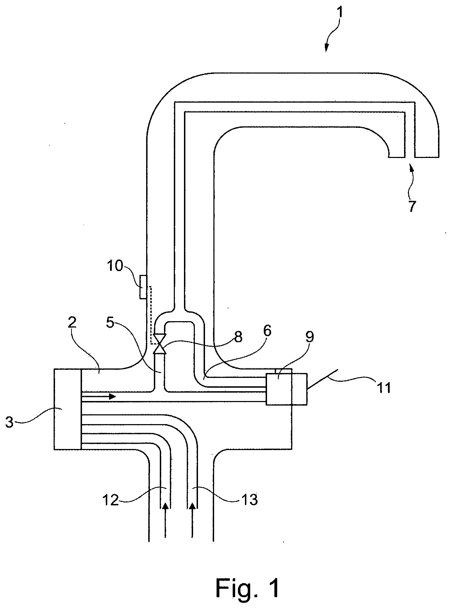

Die Fig. 1 zeigt eine Sanitärarmatur 1 mit einem Armaturengehäuse 2. Die Sanitärarmatur 1 weist eine erste Mischeinheit 3 auf, der über einen Kaltwasserzulauf 12 Kaltwasser und einem Warmwasserzulauf 13 Warmwasser zugeführt wird. Bei der ersten Mischeinheit 3 handelt es sich bei dieser Ausführungsvariante um ein mechanisches Mischventil. In der ersten Mischeinheit 3 werden das Kaltwasser und das Warmwasser zu einem Mischwasser mit einer gewünschten Mischwassertemperatur gemischt. Das durch die erste Mischeinheit 3 gemischte Mischwasser ist über einen ersten Strömungspfad 5 und einen zweiten Strömungspfad 6 zu einem Auslauf 7 des Armaturengehäuses 2 leitbar. Der erste Strömungspfad 5 ist durch ein erstes Ventil 8 und der zweite Strömungspfad 6 durch ein zweites Ventil 9 zumindest teilweise verschließbar. Das erste Ventil 8 und das zweite Ventil 9 sind parallel zueinander und jeweils in Reihe mit der ersten Mischeinheit 3 geschaltet. Bei dem ersten Ventil 8 handelt es sich bei dieser Ausführungsvariante um ein Magnetventil. Das erste Ventil 8 ist datenleitend mit einem Sensor 10 verbunden, bei dem es sich hier um einen kapazitiven Sensor handelt. Bei dem zweiten Ventil 9 handelt es sich bei dieser Ausführungsvariante um ein mechanisches Ventil, das mit einem Stellglied 11 betätigbar ist, das hier beispielhaft nach Art eines Hebels ausgebildet ist. Der Abfluss des Mischwassers aus dem Auslauf 7 des Armaturengehäuses 2 ist somit unabhängig durch das erste Ventil 8 und das zweite Ventil 9 steuerbar.

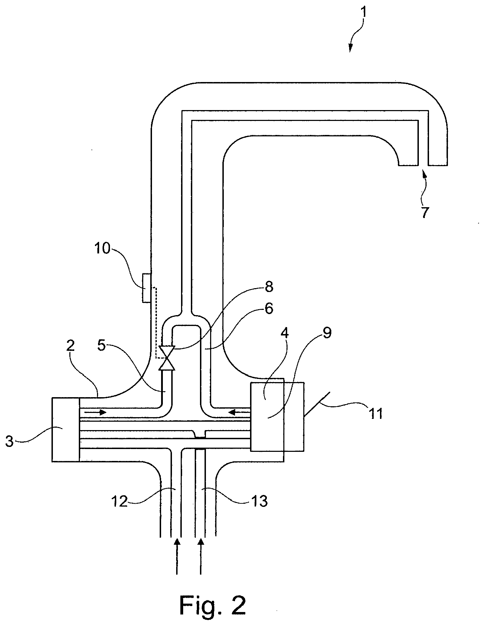

Die Fig. 2 zeigt eine Sanitärarmatur 1 mit einem Armaturengehäuse 2. Die Sanitärarmatur weist eine erste Mischeinheit 3 und eine zweite Mischeinheit 4 auf. Der ersten Mischeinheit 3 und der zweiten Mischeinheit 4 wird jeweils über einen Kaltwasserzulauf 12 Kaltwasser und über einen Warmwasserzulauf 13 Warmwasser zugeführt. Das Kaltwasser und das Warmwasser werden in der erste Mischeinheit 3 und der zweiten Mischeinheit 4 unabhängig voneinander zu einem Mischwasser mit einer gewünschten Mischwassertemperatur gemischt. Das durch die erste Mischeinheit 3 gemischte Mischwasser ist über einen ersten Strömungspfad 5 zu einem Auslauf 7 des Armaturengehäuses 2 leitbar. Weiterhin ist das durch die zweite Mischeinheit 4 gemischte Mischwasser über einen zweiten Strömungspfad 6 zu dem Auslauf 7 des Armaturengehäuses 2 leitbar. Der erste Strömungspfad 5 ist durch ein erstes Ventil 8 zumindest teilweise verschließbar. Bei dem ersten Ventil 8 handelt es sich ebenfalls um ein Magnetventil, das datenleitend mit einem Sensor 10 verbunden ist. Bei dem Sensor 10 handelt es sich hier um einen kapazitiven Sensor. Die zweite Mischeinheit 4 weist ein integriertes zweites Ventil 9 auf, mit dem der zweite Strömungspfad 6 zumindest teilweise verschließbar ist. Das zweite Ventil 9 ist mittels eines Hebels 11 durch einen Benutzer der Sanitärarmatur 1 betätigbar. Die erste Mischeinheit 3 und das erste Ventil 8 sind in Reihe geschaltet. Zudem sind die erste Mischeinheit 3 und das erste Ventil 8 parallel zu dem zweiten Ventil 9 beziehungsweise der zweiten Mischeinheit 4 geschaltet. Somit ist durch das erste Ventil 8 und das zweite Ventil 9 unabhängig voneinander ein Abfluss des Mischwassers aus dem Auslauf 7 steuerbar.

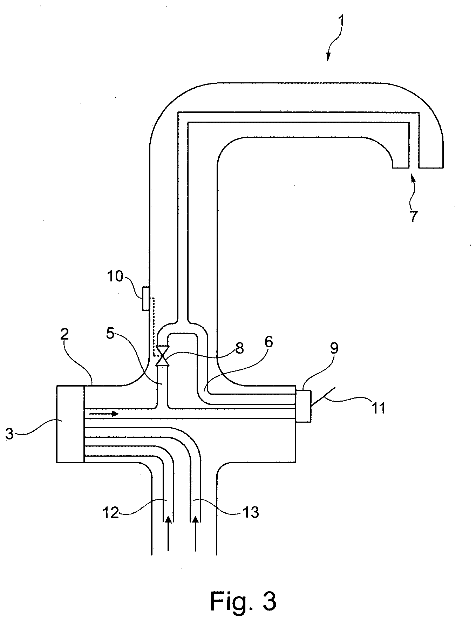

Die Fig. 3 zeigt eine Sanitärarmatur 1 mit einem Armaturengehäuse 2. Das Armaturengehäuse 2 weist eine erste Mischeinheit 3 auf, der über einen Kaltwasserzulauf 12 Kaltwasser und einen Warmwasserzulauf 13 Warmwasser zugeführt wird. Bei der ersten Mischeinheit 3 handelt es sich hier um eine Thermostat-Mischeinheit, in der das Kaltwasser und das Warmwasser zu einem Mischwasser mit einer gewünschten Mischwassertemperatur gemischt werden. Das Mischwasser ist von der ersten Mischeinheit 3 über einen ersten Strömungspfad 5 und einen zweiten Strömungspfad 6 einem Auslauf 7 des Armaturengehäuses 2 zuführbar. Der erste Strömungspfad 5 ist durch ein erstes Ventil 8 und der zweite Strömungspfad 6 durch ein zweites Ventil 9 zumindest teilweise verschließbar. Bei dem ersten Ventil 8 handelt es sich um ein Magnetventil, das datenleitend mit einem Sensor 10 verbunden ist. Bei dem Sensor 10 handelt es sich hier um einen kapazitiven Sensor. Bei dem zweiten Ventil 9 handelt es sich um ein mechanisches Ventil, das mittels eines Hebels 11 durch einen Benutzer der Sanitärarmatur 1 betätigbar ist. Das erste Ventil 8 und das zweite Ventil 9 sind parallel zueinander und jeweils in Reihe mit der ersten Mischeinheit 3 geschaltet. Somit ist auch bei dieser Ausführungsvariante durch das erste Ventil 8 und das zweite Ventil 9 unabhängig voneinander ein Abfluss des Mischwassers aus dem Auslauf 7 steuerbar.

Die vorliegende Erfindung zeichnet sich insbesondere dadurch aus, dass ein Abfluss des Mischwassers durch zwei Ventile unabhängig voneinander steuerbar ist.

### Bezugszeichenliste

- 1: Sanitärarmatur
- 2: Armaturengehäuse
- 3: erste Mischeinheit
- 4: zweite Mischeinheit
- 5: erster Strömungspfad
- 6: zweiter Strömungspfad
- 7: Auslauf
- 8: erstes Ventil
- 9: zweites Ventil
- 10: Sensor
- 11: Stellglied
- 12: Kaltwasserzulauf
- 13: Warmwasserzulauf

## Patentansprüche

1. Sanitärarmatur (1), aufweisend ein Armaturengehäuse (2) mit zumindest einer Mischeinheit (3, 4) zum Mischen eines Kaltwassers und eines Warmwassers zu einem Mischwasser, wobei das Mischwasser über einen ersten Strömungspfad (5) und einen zweiten Strömungspfad (6) zu einem Auslauf (7) des Armaturengehäuses (2) leitbar ist und wobei der erste Strömungspfad (5) durch ein erstes Ventil (8) und der zweite Strömungspfad (6) durch ein zweites Ventil (9) zumindest teilweise verschließbar ist, sodass durch das erste Ventil (8) und das zweite Ventil (9) unabhängig voneinander ein Abfluss des Mischwassers aus dem Auslauf (7) steuerbar ist.

2. Sanitärarmatur (1) nach Patentanspruch 1, wobei es sich bei dem ersten Ventil (8) um ein elektrisches Ventil, ein elektromechanisches Ventil oder ein Magnetventil handelt.

3. Sanitärarmatur (1) nach einem der vorhergehenden Patentansprüche, wobei das erste Ventil (8) durch einen Sensor (10) steuerbar ist.

4. Sanitärarmatur (1) nach Patentanspruch 3, wobei der Sensor (10) außerhalb der Sanitärarmatur (1) angeordnet ist.

5. Sanitärarmatur (1) nach einem der vorhergehenden Patentansprüche, wobei es sich bei dem zweiten Ventil (9) um ein mechanisches Ventil, eine Mischkartusche oder eine zweite Mischeinheit (4) handelt.

6. Sanitärarmatur (1) nach einem der vorhergehenden Patentansprüche, wobei das zweite Ventil (9) mit einem Stellglied (11) betätigbar ist.

7. Sanitärarmatur (1) nach einem der vorhergehenden Patentansprüche, wobei das erste Ventil (8) und das zweite Ventil (9) parallel zueinander und jeweils in Reihe mit einer ersten Mischeinheit (3) geschaltet sind.

## Claims

1. A sanitary fitting (1) having a fitting housing (2) with at least one mixing unit (3, 4) for mixing cold water and hot water to form mixed water, wherein the mixed water can be conducted via a first flow path (5) and a second flow path (6) to an outlet (7) of the fitting housing (2) and wherein the first flow path (5) and the second flow path (6) can be closed, at least partially, by a first valve (8) and a second valve (9), respectively, such that an outflow of the mixed water from the outlet (7) can be controlled by the first valve (8) and by the second valve (9) independently of each other.

2. The sanitary fitting (1) according to Claim 1, wherein the first valve (8) is an electric valve, an electromechanical valve or a solenoid valve.

3. The sanitary fitting (1) according to any one of the preceding claims, wherein the first valve (8) can be controlled by a sensor (10).

4. The sanitary fitting (1) according to Claim 3, wherein the sensor (10) is arranged outside the sanitary fitting (1).

5. The sanitary fitting (1) according to any one of the preceding claims, wherein the second valve (9) is a mechanical valve, a mixing cartridge or a second mixing unit (4).

6. The sanitary fitting (1) according to any one of the preceding claims, wherein the second valve (9) can be actuated by an actuator (11).

7. The sanitary fitting (1) according to any one of the preceding claims, wherein the first valve (8) and the second valve (9) are connected in parallel to each other and always in series with a first mixing unit (3).

## Revendications

1. Robinetterie sanitaire (1), comportant un corps de robinetterie (2) pourvu d'au moins un ensemble mélangeur (3, 4) destiné à mélanger une eau chaude et une eau froide en une eau mitigée, l'eau mitigée pouvant être dirigée par l'intermédiaire d'un premier trajet de flux (5) et d'un second trajet de flux (6) vers une sortie (7) du corps de robinetterie (2) et le premier trajet de flux (5) pouvant être fermé au moins partiellement par une première vanne (8) et le second trajet de flux (6) pouvant être fermé au moins partiellement par une deuxième vanne (9), de sorte que par la première vanne (8) et la deuxième vanne (9) indépendamment l'une de l'autre, un écoulement de l'eau mitigée hors de la sortie (7) puisse être commandé.

2. Robinetterie sanitaire (1) selon la revendication 1, la première vanne (8) étant une vanne électrique, une vanne électromagnétique ou une électrovanne.

3. Robinetterie sanitaire (1) selon l'une quelconque des revendications précédentes, la première vanne (8) pouvant être commandée par un capteur (10).

4. Robinetterie sanitaire (1) selon la revendication 3, le capteur (10) étant placé à l'extérieur de la robinetterie sanitaire (1).

5. Robinetterie sanitaire (1) selon l'une quelconque des revendications précédentes, la deuxième vanne (9) étant une vanne mécanique, une cartouche mélangeuse ou un second ensemble mélangeur (4).

6. Robinetterie sanitaire (1) selon l'une quelconque des revendications précédentes, la deuxième vanne (9) étant actionnable à l'aide d'un actionneur (11).

7. Robinetterie sanitaire (1) selon l'une quelconque des revendications précédentes, la première vanne (8) et la deuxième vanne (9) étant commutées en parallèle l'une de l'autre et respectivement en série avec un premier ensemble mélangeur (3).
